# FASCICULE DE BREVET EUROPEEN

(11) **EP 0 334 782 B1**
(45) Date de publication et mention de la délivrance du brevet: **20.01.1993**
(21) Numéro de dépôt: 89460009.7
(22) Date de dépôt: 17.03.1989
(51) Int. Cl.: A47J 27/18, A23L 3/02

(54) **Installation de cuisson**
Kochanlage
Cooking installation

(30) Priorité: 23.03.1988 FR 8804133
(43) Date de publication de la demande: 27.09.1989
(73) Titulaire: ARMOR-INOX SA, F-56430 Mauron (FR)
(72) Inventeur: Dreâno, Claude, F-56490 Guilliers (FR)
(74) Mandataire: Le Guen, Louis François

(56) Documents cités:
- EP-A- 0 070 228
- US-A- 3 511 169
- US-A- 4 173 993
- US-A- 4 270 598

## Description

La présente invention concerne une installation de cuisson d'aliments emballés ou non par trempage dans un liquide chaud, suivie d'un refroidissement par trempage dans un ou des liquides froids. Plus particulièrement, l'invention concerne une installation selon le préambule de la revendication 1 comportant une pluralité de cuves de cuisson, une centrale de chauffage du liquide chaud, une centrale de réfrigération d'un liquide réfrigéré, et un ensemble de conduites de distribution des liquides.

On connaît l'installation de ce type qui est décrite dans le document EP-A-70 228. Dans cette installation, la conduite aller, sur laquelle est montée une pompe, est reliée en parallèle aux cuves. Sur chaque branche parallèle de la conduite aller, est prévue une électrovanne. Une conduite retour, sur laquelle est montée une pompe, est reliée en parallèle aux cuves. Sur chaque branche parallèle de la conduite retour, est montée une électrovanne. Dans une variante, on a, par cuve, deux branches parallèles reliées à la conduite retour, l'une reliée à la sortie de trop-plein de la cuve et l'autre à la sortie de vidange, chaque branche portant une électrovanne. En pratique, cette installation dans laquelle on n'utilise qu'une pompe sur la conduite retour rend plus compliquée la programmation du circuit de commande qui, en fonction des données de cuisson des différents produits, commute les électrovannes au travail ou au repos.

Dans le document US-A-4 270 598, il est décrit une installation de cuisson de crabes, comprenant des cuves de cuisson, une centrale de chauffage de liquide chaud, une centrale de saumure et un ensemble de conduites de distribution de liquides. Dans cet installation, il est prévu une pompe par centrale si bien qu'en cas de panne d'une de ces pompes, on doit arrêter toute l'installation. L'installation d'échange thermique décrite dans le document US-A-4 173 993 souffre du même inconvénient.

Un objet de la présente invention consiste à prévoir une installation dans laquelle les cuissons dans les différentes cuves peuvent être totalement programmées indépendamment les unes des autres.

Un autre objet de l'invention consiste à prévoir une installation plus compacte.

Un autre objet de l'invention consiste à prévoir une installation qui permet de faire fonctionner les cuves de cuisson avec circulation continue pour y obtenir une bonne homogénéisation de la température quelle que soit l'altitude.

Suivant l'invention définie dans la revendication 1, il est prévu une installation de cuisson comprenant une pluralité de cuves de cuisson, une centrale de chauffage de liquide chaud, une centrale de réfrigération d'un liquide réfrigéré et un ensemble de conduites de distribution de liquide et de conduites de transport de liquider les centrales de chauffage et de réfrigération étant installées à une hauteur nettement supérieure à celles des cuves de cuisson et étant associées chacune à une canalisation de distribution reliée à sa sortie et à une canalisation de collecte reliée à son entrée, chaque cuve de cuisson étant pourvue d'une canalisation de descente reliée à chaque canalisation de distribution par une première électrovanne et d'une canalisation de remontée reliée à chaque canalisation de collecte par une seconde électrovanne, une vanne de réglage de débit étant montée en série sur la canalisation de descente qui est reliée à l'entrée de ladite cuve de cuisson, dont la sortie de trop-plein est reliée à l'entrée d'une pompe par une troisième électrovanne, dont l'entrée est également reliée à l'entrée de ladite cuve de cuisson par une quatrième électrovanne, et dont la sortie est reliée à la canalisation de remontée.

Suivant une caractéristique supplémentaire d'un mode de réalisation, en parallèle sur chaque vanne de réglage de débit est montée une cinquième vanne à gros débit.

Suivant une autre caractéristique supplémentaire, l'installation est complétée par une troisième canalisation de distribution qui est reliée, d'une part, à une conduite d'alimentation en eau du réseau et, d'autre part, à chaque canalisation de descente par une sixième électrovanne, et par une canalisation de vidange qui est reliée, d'une part, à un puits de vidange et, d'autre part, à la sortie de chaque pompe par une septième électrovanne.

Suivant une autre caractéristique supplémentaire, outre chaque pompe, des moyens sont prévus pour faire circuler le liquide à l'intérieur de chaque cuve de cuisson.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:
la Fig. 1 est une vue schématique en perspective d'une installation suivant l'invention, et
les Figs. 2 et 3 sont des vues schématiques en perspective de variantes d'une partie de l'ensemble des conduites de l'installation de la Fig. 1.

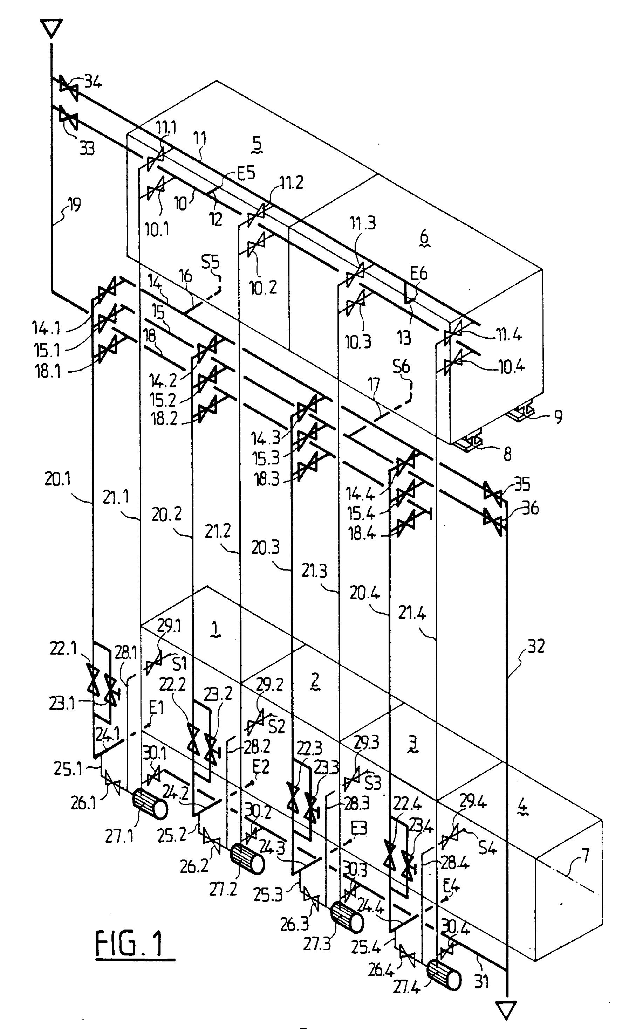

L'installation montrée à la Fig. 1 comprend quatre cuves de cuisson 1 à 4, une centrale de chauffage 5, une centrale de réfrigération 6 et un ensemble de conduites, dont les pièces composantes seront décrits en détail dans la suite.

Les quatre cuves 1 à 4 sont, dans l'exemple décrit, chacune de forme parallélépipèdiques et sont alignées. La face supérieure de chaque cuve de cuisson est un couvercle articulé, les axes des charnières des couvercles étant alignés suivant la ligne 7 qui correspond sensiblement à l'arête arrière des faces supérieures des cuves.

Les centrales 5 et 6, qui, dans l'exemple décrit, sont également de forme parallélépipèdique, sont montées sur un bâti dont on a montré deux poutrelles 8 et 9. En pratique, les poutrelles 8 et 9 sont situées à plusieurs mètres au-dessus des cuves 1 à 4, de manière à laisser suffisamment de place à un engin de levage, tel qu'un palan, auquel est suspendue une pile de paniers à descendre dans une cuve dont le couvercle est relevé, ou à remonter d'une cuve une fois la cuisson terminée. Tout l'ensemble des conduites se trouve à l'arrière des cuves 1 à 4, entre celles-ci et les centrales 5 et 6, ce qui libère tout l'espace situé devant les cuves pour l'évolution du ou des engins de levage et du personnel.

Derrière la partie haute des centrales 5 et 6 sont respectivement prévues, l'une au-dessous de l'autre, deux canalisations de collecte horizontales et longitudinales 10 et 11. Par définition, dans la suite, on désignera, par longitudinales, toutes les directions horizontales parallèles aux faces arrière des cuves 1 à 4, et, par transversales, toutes les directions horizontales perpendiculaires à ces faces arrière. La canalisation longitudinale 10 est reliée, par un tronçon transversal 12, à l'entrée E5 de la centrale de chauffe 5. La canalisation longitudinale 11, située dans le même plan vertical au-dessus de la canalisation 10, est reliée, par un coude 13, à l'entrée E6 de la centrale de réfrigération 6.

Derrière la partie basse des centrales 5 et 6 sont respectivement prévues, l'une au-dessus de l'autre, deux canalisations de distribution longitudinales 14 et 15. La canalisation 14 est reliée, par un coude 16, à la sortie S5 de la centrale de chauffe 5. La canalisation 15 est reliée, par un coude 17, à la sortie S6 de la centrale de réfrigération 6. Les canalisations 14 et 15 sont dans le même plan vertical. Au-dessous de la canalisation 15 dans le même plan vertical, est encore prévue une canalisation de distribution longitudinale 18. La canalisation 18 est reliée à une canalisation verticale 19 reliée au réseau d'alimentation en eau de ville.

Les canalisations 14, 15 et 18 sont reliées, en parallèle, à quatre canalisations verticales de descente 20.1 à 20.4, par quatre groupe de trois électrovannes chacun, 14.1, 15.1, 18.1; 14.2, 15.2, 18.2; ...; 14.4, 15.4 et 18.4. Ainsi, chacune de ces électrovannes est repérée par une premier chiffre indiquant la canalisation de départ 14, 15 ou 18, et un second chiffre correspondant au rang de la canalisation verticale d'arrivée 20.1, 20.2, 20.3 ou 20.4.

Les canalisations 10 et 11 sont reliées, en parallèle, à quatre autres canalisations verticales de remontée 21.1 à 21.4, par quatre groupes de deux électrovannes chacun, 10.1, 11.1; 10.2, 11.2; 10.3, 11.3; 10.4 et 11.4. Chacune de ces électrovannes est repérée suivant le même mode que celui mentionné ci-dessus.

En série sur la partie basse de chaque canalisation verticale 20.1 à 20.4, est montée une électrovanne 22.1 à 22.4. En parallèle sur chaque électrovanne 22.1 à 22.4 est montée une vanne à réglage de débit 23.1 à 23.4. L'extrémité basse de chaque canalisation 20.1 à 20.4 est reliée par un tronçon transversal 24.1 à 24.4 à l'entrée E1 à E4 de la cuve correspondante 1 à 4. Les entrées E1 à E4 sont chacune située en bas et à gauche de la cuve correspondante 1 à 4.

A chaque tronçon 24.1 à 24.4 est respectivement reliée une dérivation verticale 25.1 à 25.4 dont l'extrémité libre est reliée à l'entrée d'une électrovanne 26.1 à 26.4, dont la sortie est reliée à l'entrée d'une pompe 27.1 à 27.4. Les directions des axes des électrovannes 26.1 à 26.4 et des pompes 27.1 27.4 sont toutes longitudinales.

L'entrée de chaque pompe 27.1 à 27.4 est également reliée à la sortie S1 à S4 de la cuve correspondante 1 à 4, par l'intermédiaire d'un tronçon vertical 28.1 à 28.4 et d'une électrovanne à axe transversal 29.1 à 29.4. Les sorties S1 à S4 sont des sorties de trop-plein qui sont situées dans la partie haute des cuves 1 à 4, moins à gauche que les entrées E1 à E4.

La sortie de chaque pompe 27.1 à 27.4 est directement reliée à l'extrémité basse de la canalisation correspondante 21.1 à 21.4. La partie basse de chaque canalisation 21.1 à 21.4 est encore reliée, par une éléctrovanne à axe transversal 30.1 à 30.4, à une canalisations longitudinale 31, elle-même reliée à une conduite d'évacuation 32.

Chaque conduite 10 ou 11 a une extrémité fermée et son autre extrémité reliée à la conduite d'alimentation 19 par une électrovanne 33 ou 34. Chaque canalisation 14 et 15 a une extrémité fermée et son autre extrémité reliée à la conduite d'évacuation 32 par une électrovanne 35 ou 36.

On va maintenant décrire comment fonctionne l'installation qui vient d'être décrite, en supposant tout d'abord que les centrales de chauffe 5 et de réfrigération 6 sont pleines et en marche. Quand des aliments emballés sous vide ont été introduits dans la cuve 1, par exemple, on ouvre les électrovannes 14.1 et 22.1 de manière à ce que de l'eau chaude descende par gravité, par 16, 14, 14.1, 20.1, 22.1, 24.1 et E1, dans la cuve 1. Les électrovannes 29.1 et 10.1 sont fermées. Quand le niveau de l'eau dans la cuve 1 a atteint le niveau maximal, au-dessus de celui de la sortie de trop-plein S1, le détecteur de niveau correspondant fait fermer l'électrovanne 14.1. La phase de remplissage est terminée.

Chaque cuve de cuisson 1 à 4 est complétée par un détecteur de niveau d'eau haut, un détecteur de niveau d'eau bas et une sonde de température, qui ne sont pas montrés. Les centrales 5 et 6 sont également pourvues de moyens de régulation de température. Enfin, l'installation est complétée par une unité de commande des électrovannes et des pompes en fonction des données reçues des détecteurs et des sondes, l'unité étant de préférence gérée par un microprocesseur.

Si la température en un point déterminé de la cuve 1 est inférieure à la température de consigne, le détecteur d'écart de température, non montré, fait ouvrir les électrovannes 29.1, 10.1 et 14.1, fermer l'électrovanne 22.1 et mettre en marche la pompe 27.1. L'eau s'écoule par S1, 29.1 et 28.1 pour entrer dans la pompe 27.1 qui la renvoit par 21.1 et 10.1 dans la centrale de chauffe 5. Il s'agit de la phase de circulation. L'eau encore trop froide de la cuve 1 est renvoyée dans la centrale 5 qui fournit une eau chaude. L'électrovanne 22.1 étant fermée, la vanne 23.1 limite le débit si bien que les produits en cours de cuisson ne sont pas déplacés par des courants trop importants. Dans ces deux phases de fonctionnement, on suppose que les électrovannes 26.1 et 30.1 sont fermées. Par contre la vanne 23.1 dont le débit est choisi relativement faible est ouverte. Au bout d'un certain temps, la température de l'eau de la cuve devient égale à la température de consigne, la pompe concernée est alors arrêtée et les électrovannes 14.1 et 29.1 sont fermées. Comme on l'a décrit dans le document EP-A-70 228, la cuisson peut éventuellement comprendre plusieurs phases de circulation.

Une fois la cuisson terminée, Les électrovannes 14.1, 22.1, 29.1 sont fermées et les électrovannes 26.1 et 10.1 sont ouvertes et la pompe 27.1 est mise en marche. L'eau de la cuve s'écoule par S1, 24.1, 26.1 et la pompe la renvoit par 21.1 et 10.1 dans la cuve de chauffage 5. Une fois le niveau minimal de la cuve atteint, ce qui est détecté par un détecteur de niveau, non montré, la pompe est arrêtée et l'électrovanne 26.1 est refermée. La phase de vidage d'eau chaude est terminée.

On ouvre alors, les électrovannes 18.1 et 22.1 pour remplir la cuve 1 avec de l'eau de la ville, à 14° ou 15° C par exemple. C'est la phase de remplissage. Une fois le niveau maximal atteint dans la cuve, le détecteur concerné fait ouvrir les électrovannes 29.1, 30.1, fermer l'électrovanne 22.1 et fait mettre la pompe 27.1 en marche, l'électrovanne 26.1 étant fermée. L'eau de ville circule lentement dans la cuve, au débit fixé par la vanne 23.1, et s'écoule par la canalisation de mise à l'égout 31. Cette phase de circulation dure tant que la température de la cuve 1 n'est pas descendue au-dessous d'une température de consigne prédéterminée. A ce moment, les électrovannes 18.1 et 29.1 sont fermées et l'électrovanne 26.1 ouverte. La pompe vide alors l'eau de ville de la cuve par la canalisation 31.

Une fois la cuve vide, ce qui est détecté par le détecteur de niveau minimal, on ouvre alors les électrovannes 15.1 et 22.1, après avoir refermé les électrovannes 26.1, 29.1 et 30.1 et on arrête la pompe 27.1. La cuve 1 se remplit d'eau réfrigérée, à 5° C par exemple, provenant de la cuve 6. Quand le niveau maximal est atteint dans la cuve 1, on procède à une phase de circulation, comme dans le cas de la cuisson, mais en ouvrant l'électrovanne 11.1 au lieu de l'électrovanne 10.1. Le vidage de l'eau réfrigérée de la cuve se fait comme précédemment, mais en ouvrant l'électrovanne 11.1.

Toutes les fermetures et ouvertures des électrovannes et les mises en marche et à l'arrêt des pompes sont commandées à partir d'une unité de commande électronique, gérée par un microprocesseur, en fonction des mesures effectuées dans les cuves et de données dépendant des produits et des masses à cuire. Le remplissage et la vidange des centrales 5 et 6 est évidente en actionnant les électrovannes 33 à 36.

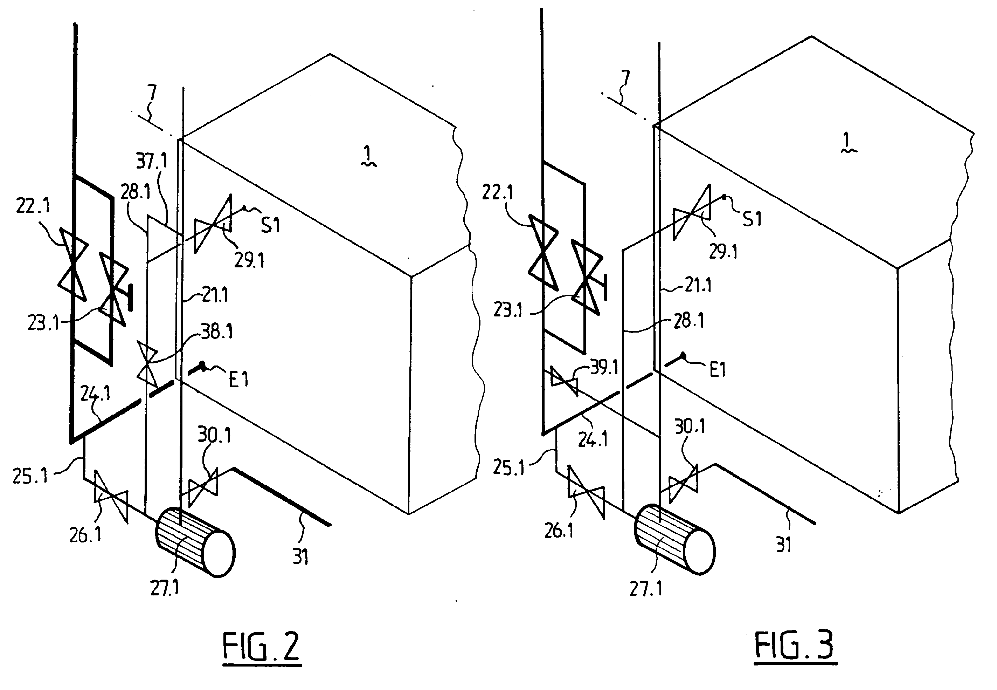

A la Fig. 2, on a représenté une variante d'installation qui permet d'assurer une circulation interne dans une cuve de cuisson, par exemple pour obtenir, en phase de chauffage entre deux phases de circulation, une bonne homogénéisation de la température quelle que soit l'altitude. Dans cette variante, le conduit 28.1 est prolongé, vers le haut, au-delà du niveau de l'électrovanne 29.1 et, à son extrémité supérieure, est reliée, par un tronçon longitudinal 37.1, à la canalisation 21.1. Par ailleurs, une électrovanne 38.1 est montée en série sur la conduite 28.1 en amont de l'entrée de la pompe 27.1. Les électrovannes 38.1 et 10.1 étant fermées et les électrovannes 29.1 et 26.1 ouvertes, la marche de la pompe 27.1 permet de faire circuler l'eau par 21.1, 37.1, 28.1, 29.1, S1, la cuve 1, E1 et 26.1.

A la Fig. 3, on a représenté une autre variante d'installation qui permet aussi d'assurer une circulation interne dans une cuve de cuisson. Dans cette dernière variante, entre la sortie de la pompe 27.1, c'est-à-dire le bas du tuyau 28.1, et l'entrée E1 de la cuve 1, c'est-à-dire le bas de la canalisation 20.1, on monte une vanne 39.1. Les électrovannes 10.1, 11.1 et 26.1 étant fermées, les vannes 29.1 et 39.1 étant ouvertes, la marche de la pompe 27.1 permet de faire circuler l'eau par 21.1, 39.1, 24.1, E1, la cuve 1, S1, 29.1 et 28.1.

Dans les variantes de Figs. 2 et 3, on a pris pour exemple la cuve 1, mais il est bien évident que l'on peut réaliser les mêmes variantes sur n'importe quelle cuve de l'installation.

Le fonctionnement qui vient d'être décrit s'applique particulièrement bien aux produits emballés sous vide. Dans le cas de produits emballés sous une gaz neutre, les cuves peuvent être pourvues de moyens de mise en pression. Elle doivent alors être construites comme des autoclaves.

## Revendications

1. Installation de cuisson d'aliments emballés ou non comprenant une pluralité de cuves de cuisson (1 à 4), une centrale de chauffage de liquide chaud (5), une centrale de réfrigération d'un liquide réfrigéré (6) et un ensemble de conduites de distribution de liquide et de conduites de transport de liquide, caractérisée en ce que les centrales de chauffage (5) et de réfrigération (6) sont installées à une hauteur nettement supérieure à celles des cuves de cuisson (1 à 4) et sont associées chacune à une canalisation de distribution (14 ou 15) reliée à son entrée (S5 ou S6) et à une canalisation de collecte (10 ou 11) reliée à son entrée (E5 ou E6), chaque cuve de cuisson (1) étant pourvue d'une canalisation de descente (20.1) reliée à chaque canalisation de distribution (14 ou 15) par une première électrovanne (14.1 ou 15.1) et d'une canalisation de remontée (21.1) reliée à chaque canalisation de collecte (10 à 11) par une seconde électrovanne (10.1 ou 11.1), une vanne de réglage de débit (23.1) étant montée en série sur la canalisation de descente (20.1) qui est reliée à l'entrée (E1) de ladite cuve de cuisson (1), dont la sortie de trop-plein (S1) est reliée à l'entrée d'une pompe (27.1) par une troisième électrovanne (29.1), dont l'entrée est également reliée à l'entrée de ladite cuve de cuisson par une quatrième électrovanne (26.1), et dont la sortie est reliée à la canalisation de remontée (21.1).

2. Installation suivant la revendication 1, caractérisée en ce qu'en parallèle sur chaque vanne de réglage de débit (23.1) est montée une cinquième vanne à gros débit (22.1).

3. Installation suivant la revendication 2, caractérisée en ce que l'installation est complétée par une troisième canalisation de distribution (18) qui est reliée, d'une part, à une conduite d'alimentation en eau du réseau et, d'autre part, à chaque canalisation de descente (20.1) par une sixième électrovanne (18.1), et par une canalisation de vidange (31) qui est reliée, d'une part, à un puits de vidange et, d'autre part, à la sortie de chaque pompe (27.1) par une septième électrovanne (30.1).

4. Installation suivant l'une des revendications 1 à 3, caractérisée en ce que des moyens (37.1 et 38.1) sont prévus pour faire circuler le liquide à l'intérieur de chaque cuve de cuisson.

5. Installation suivant l'une des revendications 1 à 4, caractérisée en ce que chaque cuve peut être munie de moyens de pressurisation.

## Patentansprüche

1. Kochanlage für verpackte oder unverpackte Nahrungsmittel, bestehend aus einer Vielzahl von Kochbottichen (1 bis 4), einer Erhitzungsstation (5) für heiße Flüssigkeit, und einer Kühlstation (6) für Kühlflüssigkeit und einer Gruppe von Flüssigkeitsverteilungsrohren und Flüssigkeitsförderrohren, dadurch gekennzeichnet, daß die Erhitzungs-(5) und Kühlstationen (6) in einer Höhe installiert sind, die deutlich über der der Kochbottiche (1 bis 4) liegt, und jeder ein Verteilungsrohr (14 oder 15), welches mit ihrem Auslaß (S5 oder S6) in Verbindung steht, und ein Sammelrohr (10 oder 11), welches mit ihrem Einlaß (E5 oder E6) in Verbindung steht, zugeordnet ist, wobei jeder Kochbottich (1) mit einem Fallrohr (20.1), das über ein erstes Elektroventil (14.1 oder 15.1) mit jedem Verteilungsrohr (14 oder 15) verbunden ist, sowie mit einem Steigrohr (21.1), das über ein zweites Elektroventil (10.1 oder 11.1) mit jedem Sammelrohr (10 bis 11) verbunden ist, ausgestattet ist, und ein Durchsatzregelventil (23.1) in Reihe in das Fallrohr (20.1) eingebaut ist, welches mit dem Einlaß (E1) des besagten Kochbottichs (1) verbunden ist, dessen Überlaufauslaß (S1) über ein drittes Elektroventil (29.1) mit dem Einlaß einer Pumpe (27.1) in Verbindung steht, der über ein viertes Elektroventil (26.1) gleichfalls mit dem Einlaß des besagten Kochbottichs verbunden ist und deren Auslaß mit dem Steigrohr (21.1) in Verbindung steht.

2. Anlage nach Anspruch 1, dadurch gekennzeichnet, daß parallel zu jedem Durchsatzregelventil (23.1) ein fünftes, großes Durchsatzventil (22.1) eingebaut ist.

3. Anlage nach Anspruch 2, dadurch gekennzeichnet, daß die Anlage ergänzt ist durch ein drittes Verteilungsrohr (18), das einerseits mit einem Hauptwasserzuleitungsrohr und andererseits über ein sechstes Elektroventil (18.1) mit jedem Fallrohr (20.1) verbunden ist, und durch ein Ablaufrohr (31), welches einerseits mit einem Ablaufschacht und andererseits über ein siebentes Elektroventil (30.1) mit dem Auslaß jeder Pumpe (27.1) verbunden ist.

4. Anlage nach einem der Ansprüche 1 bis 3, dadurch gekennzeichnet, daß Mittel (37.1 und 38.1) vorgesehen sind, die eine Zirkulation der Flüssigkeit in jedem Kochbottich bewirken.

5. Anlage nach einem der Ansprüche 1 bis 4, dadurch gekennzeichnet, daß jeder Bottich mit Unterdrucksetzungsmitteln ausgestattet sein kann.

## Claims

1. An installation for cooking packed or non packed foods comprising a plurality of cooking vats (1 to 4), a hot liquid heating station (5), a cooled liquid cooling station (6) and a group of liquid distribution pipes and liquid conveying pipes, characterised in that the heating (5) and cooling (6) stations are installed at a height distinctly higher than those of the cooking vats (1 to 4) and each are assocaited with a distribution pipe (14 or 15) connected to its outlet (S5 or S6) and to a collecting pipe (10 or 11) connected to its inlet (E5 or E6), each cooking vat (1) being provided with a descending pipe (20.1) connected to each distribution pipe (14 or 15) through a first electrovalve (14.1 or 15.1) and an ascending pipe (21.1) connected to each collecting pipe (10 to 11) through a second electrovalve (10.1 or 11.1), an output regulating valve (23.1) being mounted in series on the descending pipe (20.1) which is connected to the inlet (E1) of the said cooking vat (1) the overflow outlet (S1) of which is connected to the inlet of a pump (27.1) through a third electrovalve (29.1) the inlet of which is likewise connected to the inlet of the said cooking vat through a fourth electrovalve (26.1) and the outlet of which is connected to the ascending pipe (25.1).

2. An installation according to Claim 1, characterised in that a fifth large output valve (22.1) is mounted in parallel on each output regulating valve (23.1).

3. An installation according to Claim 2, characterised in that the installation is completed by a third distribution pipe (18) which is connected, on the one hand, to a mains water feed pipe and on the other hand to each descending pipe (20.1) through a sixth electrovalve (18.1) and through a draining pipe (31) which is connected on the one hand to a draining well and on the other hand to the outlet of each pump (27.1) through a seventh electrovalve (30.1).

4. An installation according to one of the Claims 1 to 3, characterised in that means (37.1 and 38.1) are provided to cause the liquid to circulate inside each cooking vat.

5. An installation according to one of the Claims 1 to 4, characterised in that each vat may be probided with pressurisation means.
